Europäisches Patentamt

European Patent Office

Office européen des brevets

(11) Veröffentlichungsnummer: **0 447 791 A2**

## (12) EUROPÄISCHE PATENTANMELDUNG

(21) Anmeldenummer: **91101945.3**

(22) Anmeldetag: **12.02.91**

(51) Int. Cl.5: **G05D 16/20**

(30) Priorität: **06.03.90 DE 4006905**

(43) Veröffentlichungstag der Anmeldung:
**25.09.91 Patentblatt 91/39**

(84) Benannte Vertragsstaaten:
**DE FR GB IT**

(71) Anmelder: **HYDAC TECHNOLOGY GMBH**
**Postfach 1251**
**W-6603 Sulzbach/Saar(DE)**

(72) Erfinder: **Baldauf, Karl-Eberhard, Dipl.-Ing.**
**Bismarckstrasse 96**
**W-6600 Saarbrücken(DE)**

(74) Vertreter: **Patentanwälte Phys. Bartels**
**Dipl.-Ing. Fink Dr.-Ing. Held**
**Lange Strasse 51**
**W-7000 Stuttgart 1(DE)**

(54) **Verfahren zum Einhalten eines vorgebbaren Druck-Sollwertes und Vorrichtung zum Durchführen des Verfahrens.**

(57)
1. Verfahren zur Feststellung der Gasvorspannung bei Hydrospeichern und zum Einhalten eines Druck-Sollwertes der Gasvorlage während des Betriebes.

2. Die Erfindung betrifft ein Verfahren sowie eine für dieses Verfahren verwendbare Vorrichtung zum Messen des Druckes eines Gases in mindestens einem Behälter, insbesondere zum Feststellen der Gasvorspannung in einem Hydrospeicher 1 und/oder zum Einhalten eines vorgebbaren Druck-Sollwertes in diesem Behälter. Bei einem hierfür vorgesehenen Meßvorgang wird, zumindest zeitweise, eine das Gas austauschende Verbindung zwischen dem Behälter und einer vorzugsweise nur einen Bruchteil des Behältervolumens aufweisenden Meßkammer 7 hergestellt, die über eine Druckmeßeinrichtung 8 verfügt. Für das Einhalten des Druck-Sollwertes wird, zumindest zeitweise, die Verbindung zwischen dem Behälter und einer Nachfülleinrichtung hergestellt, die bei einem Druck-Istwert im Behälter, der kleiner ist als der Druck-Sollwert, den Behälter mit Gas befüllt.

EP 0 447 791 A2

Die Erfindung betrifft ein Verfahren zum Einhalten eines vorgebbaren Druck-Sollwertes eines in mindestens einem Behälter aufnehmbaren Gases, dessen Druck-Istwert mittels eines Meßvorganges erfaßt wird, bei dem eine gasführende Verbindung zwischen dem Behälter und einer einen Bruchteil des Behältervolumens aufweisenden Meßkammer hergestellt wird, die über eine Druckmeßeinrichtung verfügt, wobei für das Einhalten des Druck-Sollwertes eine gasführende Verbindung zwischen dem Behälter und einer Regulereinrichtung hergestellt wird, die bei einem Druck-Istwert, der kleiner oder größer ist als der Druck-Sollwert, den Behälter mit Gas befüllt bzw. von Gas entleert.

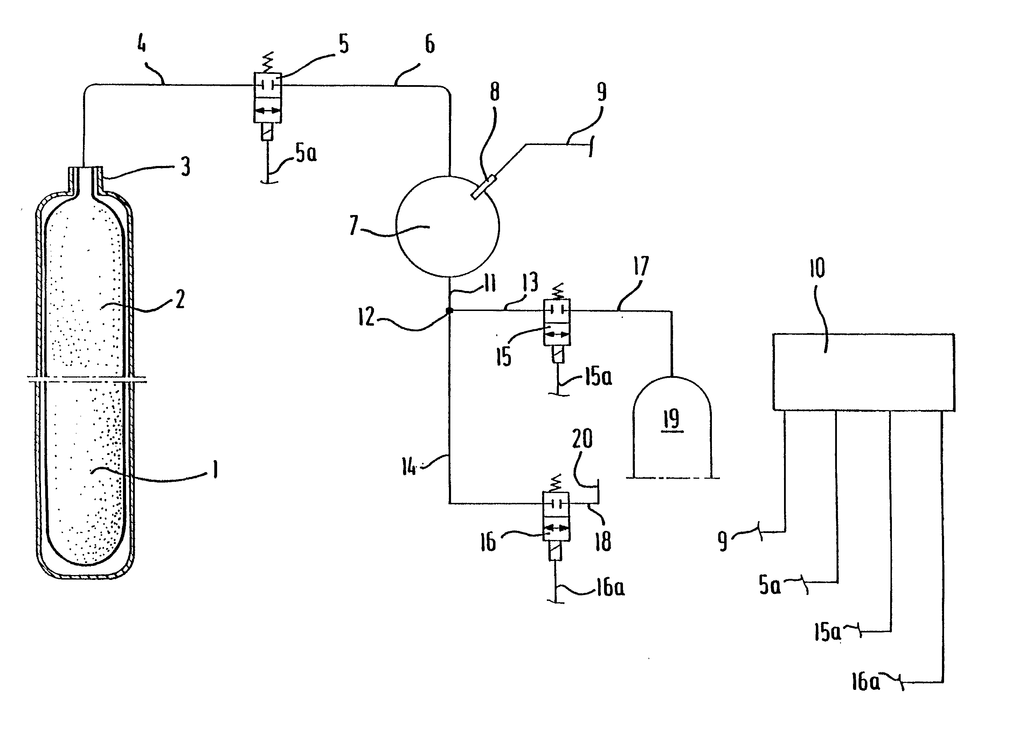

Ein dahingehendes Verfahren ist durch die DE-OS 34 11 151 bekannt. Dieses bekannte Verfahren dient zum automatischen Überwachen und Einregeln des Luftdrucks bei mit Behältern versehenen Pneumatikvorrichtungen von Arbeitsmaschinen. Die dort in der Zeichnung offenbarte Meßkammer weist als Druckmeßeinrichtung einen Pneumatikdruckaufnehmer auf, der als Druckumformer mit piezoresistiver Vollbrücke den Druck-Istwert des Gases im Behälterinnern ständig überwacht und den gemessenen Wert für die weitere Meßwertverarbeitung in ein digitales elektrisches Signal umformt. Neben dieser ständig gasführenden Verbindung zwischen dem Behälter und der Meßkammer besteht bei dieser bekannten Lösung eine weitere gasführende Verbindung zwischen der Regulereinrichtung und diesem Behälter.

Wird bei dem bekannten Verfahren aus dem Behälter nun Gas zum Betrieb der Pneumatikvorrichtung entnommen, kommt es üblicherweise zu nicht mehr rechenbaren Systemzuständen im Hinblick auf Druck, Temperatur und Volumen des im Innern des Behälters eingeschlossenen Gases, die die Ergebnisse der Druckmessung zur Erfassung des tatsächlichen Druck-Istwertes verfälschen, so daß die angesteuerte Regulereinrichtung nicht in der Lage ist, den Behälter mit der Dosiermenge an Gas zu befüllen bzw. von Gas zu entleeren, die notwendig ist, um den vorgegebenen Druck-Sollwert im Behälter genau einzuhalten. Erschwerend kommt noch mit hinzu, daß ein gewisser nicht rechenbarer Gasverlust in Abhängigkeit von der Betriebsweise der Pneumatikvorrichtung und damit des Behälters auftritt.

Ausgehend von diesem Stand der Technik liegt der Erfindung die Aufgabe zugrunde, ein Verfahren zum Einhalten eines vorgebbaren Druck-Sollwertes eines in mindestens einem Behälter aufnehmbaren Gases zu schaffen, das äußerst genau arbeitet, so daß der betriebsbereite Behälter immer einen genau vorgebbaren Systemzustand einnimmt. Diese Aufgabe löst ein Verfahren mit den Merkmalen des Anspruchs 1.

Dadurch, daß die Regulereinrichtung gemäß dem erfindungsgemäßen Verfahren eine mit der Meßkammer identische Dosierkammer aufweist, mittels der das Befüllen bzw. Entleeren mit einer vorgebbaren Dosiermenge durchgeführt wird, und daß die gasführende Verbindung zu vorgebbaren Zeitpunkten freigegeben oder versperrt wird, ist der Druckmeßvorgang des Druck-Istwertes, abgekoppelt und damit ungestört vom jeweiligen Betriebszustand des Behälters, durchführbar. Die hierbei ermittelten tatsächlichen Druck-Istwerte des Gases lassen sich dann auf eine genau vorgebbare Dosiermenge an Gas umrechnen, mit der der Behälter zu befüllen bzw. zu entleeren ist, je nachdem, ob der jeweils ermittelte Druck-Istwert kleiner bzw. größer dem vorgebbaren Druck-Sollwert ist. Die mit der Meßkammer identische Dosierkammer weist mithin ebenfalls nur den Bruchteil des Behältervolumens auf, so daß "portionsweise" die ermittelte Dosiermenge über die Dosierkammer geht. Durch dieses feine Dosieren nähert sich der Druck-Istwert stetig dem vorgebbaren Druck-Sollwert, ohne daß die Druckverteilung des Gases im Behälter sich derart unkontrollierbar ändert, daß es zu Meßverfälschungen bei dem Ermitteln des Druck-Istwertes des Gases im Behälter während eines Meßvorganges kommt. Eine stetige und damit sichere Überwachung des Gasdruckes über die Druckmeßeinrichtung sowohl beim Befüllen als auch beim Entleeren ist möglich.

Als Behälter kommen für das erfindungsgemäße Verfahren, insbesondere Hydrospeicher in Frage, bei denen es notwendig ist, die sogenannte Gasvorspannung (= vorgegebener Druck-Sollwert), die zum bestimmungsgemäßen Betrieb eines derartigen Speichers erforderlich ist, in gewissen zeitlichen Abständen zu kontrollieren, da in der Regel mit einem gewissen Gasverlust in Abhängigkeit von der Betriebsweise des Speichers zu rechnen ist.

Hierzu ist es bisher notwendig gewesen, die entsprechende Hydraulikanlage auf der sogenannten Ölseite vollständig drucklos zu machen, jedenfalls zumindest den Teil der Anlage, die den Hydrospeicher betraf, um dann in diesem drucklosen Zustand den Gasvorspannungsdruck des in dem Hydrospeicher befindlichen Gases, meist Stickstoffgas, zu überprüfen und gegebenenfalls nachzufüllen. Dieser zeitaufwendige Vorgang, bei der die Hydrospeicheranlage im Zeitraum der Überprüfung nicht betriebsbereit ist, ist mit dem vorliegenden erfindungsgemäßen Verfahren vermieden.

Bei einer bevorzugten Ausführungsform des erfindungsgemäßen Verfahrens wird für den Meßvorgang das Gas im Behälter auf ein vorgebbares Volumen gebracht, für das der Druck-Sollwert bekannt ist. Der Behälter in Form eines Hydrospeichers weist vor seiner ersten Inbetriebnahme, also bevor er das erste Mal ölseitig mit Fluid befüllt wird, einen bestimmten vorgebbaren Druck-Sollwert (= Gasvorspannung) auf. Wird nun der Druck-Istwert im Hydrospeicher nach dessen Inbetriebnahme mittels der Meß- und Dosierkammer unter denselben Bedingungen erfaßt, also bei ölseitig völlig entleertem Hydrospeicher, lassen sich der Druck-Sollwert und der Druck-Istwert ohne weitere Umrechnung unmittelbar miteinander vergleichen und demgemäß eine Korrektur an der herrschenden Gasvorspannung vornehmen. Man kann aber auch einen Druck-Sollwert auf einen bestimmten Befüllungszustand des Hydrospeichers mit Drucköl beziehen und für die Druck-Istwertermittlung den Hydrospeicher auf diesen Befüllungszustand durch Abgabe oder Zufuhr von Hydrauliköl bringen und dann den Soll-Ist-Wertvergleich vornehmen.

Bei einer anderen bevorzugten Ausführungsform des erfindungsgemäßen Verfahrens wird der Behälter mittels der Meß- und Dosierkammer mit einer vorgebbaren Dosiermenge befüllt, die einen Druckanstieg im Behälter bewirkt, der mittels der Druckmeßeinrichtung gemessen wird und der zu einem theoretisch ermittelten Druckanstieg in Verhältnis gesetzt wird, der sich bei Befüllen mit derselben Dosiermenge bei einem vorgegebenen Druck-Sollwert des Gases im Behälter ergibt. Hiermit läßt sich die im Behälter in Form des Hydrospeichers aktuell herrschende Gasvorspannung feststellen, ohne daß dieser ölseitig entleert werden müßte. Dieses Verfahren ist, insbesondere für die Verwendung im Kernkraftwerksbereich gedacht, bei denen für eine Notbetätigung bestimmte Anlagenteile ständig betriebsbereit zu halten sind und demgemäß eine ölseitige Entleerung der Hydrospeicher nicht in Frage kommt.

Bei einer weiteren bevorzugten Ausführungsform des erfindungsgemäßen Verfahrens wird mittels der Druckmeßeinrichtung, die an einen Rechner angeschlossen ist, der Druck-Istwert in der Meß- und Dosierkammer bezogen auf einen vorgebbaren Temperaturwert erfaßt und der Rechner steuert für das Befüllen oder Entleeren mittels der Meß- und Dosierkammer die Reguliereinrichtung an. Mit einem dahingehenden Rechner läßt sich das Verfahren automatisieren und, sofern der Rechner in eine Gesamtrechnereinheit eingebunden ist, eine Prozeßüberwachung erreichen. Hierbei ist es vorteilhaft, in der Meß- und Dosierkammer den Druck-Istwert bezogen auf einen Temperaturwert zu erfassen, der vorzugsweise dem Temperaturwert entspricht, bei dem der Druck-Sollwert des Hydrospeichers (Behälter) bei ölseitig entleertem Speicher vor seiner ersten Inbetriebnahme erfaßt worden ist, der regelmäßig der Raumtemperatur entspricht. Auf diese Art und Weise lassen sich temperaturbedingte Fehler bei der Messung vermeiden. Sofern der erfaßte Druck-Sollwert im Hydrospeicher auf einen bestimmten vorgebbaren Temperaturwert, beispielsweise die Raumtemperatur, bezogen ist, kann auch über eine zusätzlich in oder an der Meß- und Dosierkammer installierte Kühl- und/oder Beheizungseinrichtung dieser Temperaturwert für eine Druckmessung eingestellt werden.

Eine Kühlung der Meßkammer empfiehlt sich vor allem dann, wenn der Hydrospeicher durch starken Arbeitseinsatz sich erhitzt.

Bei einer besonders bevorzugten Ausführungsform wird mittels einer Temperaturmeßeinrichtung der Meß- und Dosierkammer die jeweils in ihr herrschende Temperatur gemessen und der Rechner rechnet den bei dieser jeweiligen Temperatur über die Druckmeßeinrichtung ermittelten Druck-Istwert auf einen vorgebbaren Bezugs-Temperaturwert um. Es wird also die jeweils in der Meß- und Dosierkammer herrschende Gastemperatur gemessen und der Rechner ermittelt hieraus den Druck-Istwert bei Soll-Temperatur, der dann dem Druck-Sollwert bei dieser Soll-Temperatur für den Nachregelvorgang der Füllmenge gegenübergestellt wird.

Vorzugsweise leitet in diskreten Zeitabständen der Rechner gemäß einem vorgebbaren Programm einen Meßvorgang und/oder einen Befüllvorgang und/oder einen Entleervorgang ein. Diese Zeitabstände können auch sehr weit auseinanderliegen. So ist es denkbar, daß beispielsweise bei Hydraulikanlagen, die für einen Störfall in einem Kernkraftwerk oder dergleichen vorgesehen sind, die dazugehörigen Hydrospeicher nur einmal im Jahr überprüft werden. Das Programm kann auch so gewählt sein, daß etwa bei einer zu großen Abweichung von dem Druck-Sollwert, wie er beispielsweise entsteht, wenn Gas schlagartig aus dem Speicher austritt oder wenn das Hydrauliköl auf die Gasseite gelangt, ein Warnsignal abgegeben wird, das die Bedienmannschaft veranlaßt, eine Kontrolle des Hydrospeichers vorzunehmen. Besonders wirtschaftlich ist es, das Verfahren in einer Speicheranlage mit mehreren zusammengeschlossenen Behältern in Form der Hydrospeicher anzuwenden.

Um das erfindungsgemäße Verfahren durchführen zu können, weist die hierfür vorgesehene Vorrichtung mindestens die folgenden Komponenten auf:
- eine an das Innere eines Behälters über eine gasführende, absperrbare Verbindung anschließbare Meßkammer,
- eine Druckmeßeinrichtung und
- eine Reguliereinrichtung, die eine Dosierkammer aufweist, die identisch mit der Meßkammer ist.

Bei einer bevorzugten Ausführungsform der erfindungsgemäßen Vorrichtung ist das Kammervolumen der Meß- und Dosierkammer kleiner gleich 15% des Volumens des Behälters, was zu besonders guten Verfahrensergebnissen führt.

Sofern die Meß- und Dosierkammer alternativ entweder mittels gasführender, absperrbarer Verbindungen an eine Befüllungseinrichtung oder an eine Druck-Abgabestelle der Reguliereinrichtung anschließbar ist, werden die in den Hydrospeicher nachzufüllenden Mengen der Befüllungseinrichtung entnommen und bei einem Druck-Istwert im Hydrospeicher, der höher ist als sein Druck-Sollwert, die überflüssigen Gasmengen für einen Druckabbau über die Druck-Abgabestelle abgegeben, die bei Verwendung von Stickstoff als Füllgas das Gas unmittelbar an die Umgebung abgibt.

Sofern die Befüllungseinrichtung vorzugsweise Mittel aufweist, die den von ihr abgebbaren Druck konstant halten, wird vermieden, daß beim Anschluß der Meß- und Dosierkammer an die Befüllungseinrichtung nachzufüllendes Gas in der Meß- und Dosierkammer im Druck ständig abnimmt. Damit ist eine Fehlerquelle vermieden und der ganze Vorgang ist rechnerisch klar erfaßbar.

Vorzugsweise steuert der Rechner für das Durchführen des Verfahrens einfach aufgebaute Ventile an, die die jeweiligen Verbindungen zwischen den einzelnen Komponenten der erfindungsgemäßen Vorrichtung für einen Gastransport freigeben bzw. für dessen Unterbinden versperren.

Als zusätzliche Komponente ist vorzugsweise eine Temperaturmeßeinrichtung für die Meß- und Dosierkammer vorgesehen, mittels der sich der tatsächlich in der Meß- und Dosierkammer vorhandene Druck-Istwert mittels dem Rechner auf einen Druck-Istwert bei Solltemperatur umrechnen läßt. Das erfindungsgemäße Verfahren und die Vorrichtung sind im folgenden anhand der Zeichnung, die eine Ausführungsform der erfindungsgemäßen Vorrichtung zeigt, näher erläutert.

Mit 1 ist in der Zeichnung als Behälter ein Hydrospeicher üblicher Bauart im Prinzip dargestellt. Dieser kann ein Blasen-, Kolben- oder Membranspeicher sein. Der Hydrospeicher 1 weist eine Blase 2 auf, die mit Gas, hier in Form von Stickstoff-Gas, befüllbar ist und die in Abhängigkeit des in ihr herrschenden Druckes diesen ölseitig an ein Fluid, meist in Form von Drucköl, weitergibt, welches aus Vereinfachungsgründen in der Zeichnung nicht dargestellt ist. Auf der Oberseite des Hydrospeichers 1 ist eine Gaseinfüllbohrung 3 vorhanden, in der üblicherweise ein Gaseinfüllventil eingesetzt ist.

Bei der erfindungsgemäßen Vorrichtung ist anstelle dieses bekannten Gaseinfüllventiles eine gasführende Leitung 4 vorhanden, die das Innere der Blase 2 des Hydrospeichers 1 mit einem elektromagnetisch betätigbaren 2/2-Wege-Ventil 5 verbindet. Von diesem 2/2-Wege-Ventil 5 führt eine weitere gasführende Leitung 6 zu einer Meß- und Dosierkammer 7, die im wesentlichen kugelförmig ausgebildet ist und deren Volumen kleiner als 3 % des Volumens des Hydrospeichers 1 ist, vorzugsweise sogar kleiner als 1 % seines Volumens ist. Aus Vereinfachungsgründen wurde in der Zeichnung auf eine maßstabsgetreue Wiedergabe der Verhältnisse verzichtet. In der Meß- und Dosierkammer 7 ist als Druckmeßeinrichtung ein Drucksensor 8 vorhanden, der über eine entsprechende Meßleitung 9 an einen in der Figur nur symbolhaft angedeuteten Rechner 10 über eine gleichlautende Schnittstelle 9 angeschlossen ist.

Von der Meß- und Dosierkammer 7 führt eine gasführende Leitung 11 zu einem Verzweigungspunkt 12, wo die Leitung 11 sich in zwei weitere gasführende Leitungen 13 und 14 aufteilt, die jeweils an ein 2/2-Wege-Ventil 15 bzw. 16 angeschlossen sind. Von den beiden 2/2-Wege-Ventilen 15 und 16 laufen ferner jeweils eine gasführende Leitung 17 bzw. 18 zu einer Gasflasche 19, die als Befüllungseinrichtung Teil der erfindungsgemäßen Reguliereinrichtung ist und ebenfalls Stickstoff-Gas enthält bzw. zu einer ins Freie führenden Druck-Abgabestelle 20. Die Gasflasche 19 ist in der Zeichnung aus Vereinfachungsgründen nur teilweise dargestellt.

Die 2/2-Wege-Ventile 5, 15 und 16 sind in der Zeichnung in ihrer Ruhestellung dargestellt, bei denen der gasführende bzw. gasaustauschende Weg zwischen den jeweils angeschlossenen Leitungen gasdicht versperrt ist. Diese Ruhestellung wird in bekannter Weise durch Federkraft erreicht und die Ventile sind aus Gründen der Gasdichtheit heraus zweckmäßigerweise als Sitzventile ausgebildet.

Um die 2/2-Wege-Ventile in ihre gasdurchlassende Stellung zu schalten, sind Elektromagnete der üblichen Art vorgesehen, die bei einer elektrischen Anregung das Ventil schalten. Für ein dahingehendes Schalten weisen die 2/2-Wege-Ventile 5, 15 und 16 elektrische Zuleitungen 5a, 15a sowie 16a auf, die über entsprechende gleichlautende Schnittstellen an den Rechner 10 zum Ansteuern der in Rede stehenden 2/2-Wege-Ventile angeschlossen sind.

Um die tatsächlich herrschende Gasvorspannung in dem Hydrospeicher 1, insbesondere in dessen Blase 2, festzustellen, gibt der Rechner 10 über die Leitung 5a einen Schaltimpuls an das 2/2-Wege-Ventil 5 ab, das daraufhin in seine gasdurchlassende Stellung schaltet. Es ist nun eine das Gas in Form des Stickstoffgases austauschende Verbindung zwischen dem Inneren des Hydrospeichers 1 und der Meß- und Dosierkammer 7 gegeben. Der Anschluß der Meß- und Dosierkammer 7 an den Hydrospeicher 1 über die Leitungen 4 und 6 ist derart, daß diese Leitungen im Querschnitt großzügig dimensioniert und in ihrer Länge kurz gehalten sind, um einen Gasaustausch zwischen Hydrospeicher 1 und der angesprochenen Meß- und Dosierkammer 7 relativ ungehindert vonstatten gehen zu lassen. Ferner kann es vorgesehen sein, daß das 2/2-Wege-Ventil 5 über mehrere Taktabläufe der angeschlossenen Hydraulikanlage offenstehen bleibt, um auf diese Weise nur noch den Gasausgleich zwischen gefülltem oder teilgefülltem und ölseitig entleertem Speicher ausgleichen zu müssen. Nach Entleerung des Hydrospeichers 1 auf seiner Ölseite während eines Arbeitstaktes wird - bevor ein erneutes Füllen des Speichers erfolgt - über den Rechner 10 ein entsprechender Schaltimpuls an das 2/2-Wege-Ventil 5 abgegeben und dieses in seine Sperrstellung geschaltet. In der Meß- und Dosierkammer 7 ist nun eine Gasmenge eingeschlossen, die im wesentlichen den Ist-Druckwert des im Hydrospeicher 1 befindlichen Gases hat, wenn dieser ölseitig vollständig entleert ist.

Der Rechner 10 mißt nun über den Drucksensor 8 den tatsächlichen Druck-Istwert in der Meß- und Dosierkammer 7 und vergleicht diesen mit dem vorgegebenen Druck-Sollwert im Hydrospeicher, dessen Größe bei ölseitig vollständig entleertem Hydrospeicher bekannt ist, da dies seiner Gasvorspannung entspricht, mit der er werkseitig vor seiner ersten Inbetriebnahme versehen worden ist. Üblicherweise kennt man den Druck-Sollwert bei ölseitig entleertem Speicher bei einer Bezugstemperatur, die beispielsweise einer Raumtemperatur von 20° C entspricht. Man kann nun die in der Meß- und Dosierkammer 7 eingeschlossene Gasmenge über einen vorgebbaren Zeitraum, beispielsweise 3 Min., bevor eine Druckmessung über den Drucksensor 8 stattfindet, eingeschlossen halten, um eine Angleichung des Temperaturwertes des eingeschlossenen Gases an die Umgebung zu gewährleisten, die dieser Raumtemperatur meist entsprechen wird. Auf diese Art und Weise sind temperaturbezogene Meßfehler vermeidbar.

Da der Gasverlust bei Hydrospeichern bei normalem Betrieb üblicherweise im Rahmen zwischen 1 bis 5 % des Speichervolumens liegt, wird der Drucksensor 8 in der Meß- und Dosierkammer 7 einen Druck-Istwert feststellen, der kleiner ist als der vorgegebene Druck-Sollwert im Hydrospeicher 1. Der Rechner 10 stellt nun diesen Fehlbetrag fest und betätigt nun die Reguliereinrichtung in Form der Zuleitungen 11, 13 und 17, des 2/2-Wege-Ventiles 15 sowie der Befüllungseinrichtung in Form der Gasflasche 19. Hierzu steuert der Rechner 10 über die Steuerleitung 15a das 2/2-Wege-Ventil 15 an und bringt dieses in seine gasdurchlassende Stellung. Hierdurch wird der gasaustauschende Weg zwischen der Meß- und Dosierkammer 7 und der Befüllungseinrichtung in Form der Gasflasche 19 freigegeben, so daß das Stickstoffgas in die Meß- und Dosierkammer 7 strömen kann. Wie an Hand eines nachfolgenden Berechnungsbeispiels noch gezeigt werden wird, ist hierbei der Gasdruck in der Gasflasche 19 zumindest um soviel höher gegenüber dem Druck-Sollwert des Hydrospeichers, daß die Zuflußrichtung des Gases aus der Flasche 19 heraus in Richtung auf den Hydrospeicher 1 zu auch gewährleistet ist. Beim Befüllen der Meß- und Dosierkammer 7 aus der Gasflasche 19 heraus sind die 2/2-Wege-Ventile 5 und 16 in ihrer Sperrstellung. Bei diesem Vorgang wird der Druck-Istwert des schon in der Meß- und Dosierkammer 7 befindlichen Gases, herstammend aus dem Meßvorgang, erhöht auf den in dem Stickstoffspeicher in Form der Gasflasche 19 herrschenden Gasdruck.

Das Ventil 15 wird längere Zeit offen gehalten, um den Druck- und Temperaturausgleich des überströmenden Gases zu ermöglichen. Danach wird das Ventil 15 in seine Sperrstellung mittels des Rechners 10 geschaltet und der in der Meß- und Dosierkammer 7 herrschende Druck vom Sensor 8 erneut bestimmt und an den Rechner weitergeleitet. Der Rechner kann nun aufgrund der beiden gemessenen Drücke, nämlich dem Speicherdruck mit festgestelltem Gasverlust und dem Nachfülldruck der Meß- und Dosierkammer 7, sowie aufgrund des feststehenden Verhältnisses zwischen der Größe des Hydrospeichers 1 und dieser Kammer 7 errechnen, wieviel Dosiervorgänge, d.h. Nachfülltakte notwendig sind, um den Druck-Sollwert (ursprünglich eingestellte Gasvorspannung) im Hydrospeicher 1 zu erreichen. Ein dahingehender Takt besteht darin, daß das Ventil 15 geschlossen und das Ventil 5 durch den Rechner 10 geöffnet wird, wobei der erhöhte Gasdruck aus der Meß- und Dosierkammer 7 sich in den Speicher 1 entspannt, und zwar auf den gerade während des jeweiligen Arbeitstaktes herrschenden Gasdruck im Speicher 1. Die Zuführung des vorgespannten Gases aus der Kammer 7 kann also durchaus während des Arbeitsvorganges zu einem beliebigen Zeitpunkt erfolgen, da die Kammer 7 im Verhältnis zum Hydrospeichervolumen 1 sehr klein bemessen ist. Ein entsprechendes Nachfüllen oder Dosieren geschieht dann auch entsprechend häufig, so daß beispielsweise 50 Nachfülltakte durchaus im Bereich des Möglichen liegen.

Es ist leicht einzusehen, daß bei der Gasentnahme aus der Gasflasche 19 deren Gasdruck mit Zunahme der Anzahl der Nachfülltakte abnimmt. Demgemäß würde die Kammer 7 mit Gas immer geringer werdenden Druckes nachgefüllt werden. Um die damit einhergehende Fehlerquelle auszuschließen, die allerdings auch über den Rechner 10 und den Drucksensor 8 kompensierbar wäre, kann es vorgesehen sein, zwischen dem Ventil 15 und der Gasflasche 19 eine Drucksteigerungseinrichtung, beispielsweise in Form eines Kompressors, eines Druckreduzierventiles oder in Form einer Kolbenzylindereinheit mit definierbarem Volumen, vorzusehen, die gewährleistet daß immer eine vorgebbare konstante Nachfüllmenge unter einem konstant bleibenden Druck von der Gasflasche 19 stammend an die Kammer 7 abgegeben wird. Auf diese Weise läßt sich das undefinierte Druckgefälle zwischen Hydrospeicher 1 und abgesperrter Kammer 7 vermeiden.

Stellt der Rechner 10 über den Drucksensor 8 fest, daß, nachdem eine gasaustauschende Verbindung zwischen der Meß- und Dosierkammer 7 und dem Hydrospeicher 1 hergestellt worden ist, der Druck-Istwert in der Kammer 7 größer ist als der Druck-Sollwert des Hydrospeichers 1, ist zur Druckreduzierung die damit einhergehende überflüssige Gasmenge aus dem Überwachungskreis herauszuführen. Hierzu wird unter Absperren der Ventile 5 und 15 durch den Rechner 10 über diesen das Ventil 16 in seine durchgehende Öffnungsstellung geschaltet und die in der Kammer 7 überzählige Gasmenge kann über die Leitungen 11, 14 und 18 sowie die Druckabgabestelle 20 an die Umgebung abgeführt werden. Je nachdem, wie groß die überzählige Gasmenge ist, muß auch dieser Vorgang taktweise mehrfach durchgeführt werden, bis der Rechner 10 über den Drucksensor 8 bei einem Meßvorgang den Druck-Istwert als den vorgegebenen Druck-Sollwert erkennt.

Um Gasverluste zu vermeiden, könnte auch eine nicht dargestellte Rückführeinrichtung vorhanden sein, die das über die Druckabgabestelle 20 abgegebene Gas nicht in die Umgebung entweichen läßt, sondern dieses vielmehr in einer der Gasflasche 19 entsprechenden Flascheneinheit aufnimmt. Sofern diese dann eine Verbindung mit der Zuleitung 17 aufweisen würde, wäre hier weitestgehend ein geschlossener Kreislauf verwirklicht.

Neben einem Drucksensor 8 kann die Meßkammer auch eine Temperaturmeßeinrichtung (nicht dargestellt) aufweisen, um die jeweils in der Kammer 7 herrschende Temperatur auf eine Temperaturbezugsgröße umzurechnen, für die der Drucksollwert des Hydrospeichers 1 bekannt ist.

Ferner kann die in der Zeichnung dargestellte Vorrichtung auch für ganze Speicheranlagen mit mehreren Hydrospeichern, auch verschiedener Bauart, verwendet werden. Hierbei wird durch eine entsprechende Ventilanordnung die Kammer 7 jeweils auf einen bestimmten Hydrospeicher der Speicheranlage geschaltet oder aber es wird eine blockweise Überprüfung von Gruppen von Speichern durchgeführt, die miteinander in Verbindung stehen. Bei weiterer Unterteilung kommt man dann schließlich zu demjenigen Hydrospeicher, der die potentielle Fehlerquelle darstellt.

Im folgenden soll an Hand eines Zahlenbeispieles ein Nachfüllvorgang beschrieben werden. Dies geschieht unter den folgenden Annahmen:

Speichergröße des Hydrospeichers 1 $\qquad$ $V = 100$ (1)

Speicher-Solldruck
(Gasvorspannung) $\qquad$ $p_S = 100$ (bar)

Abfall der Gasvorspannung
nach einer Betriebszeit t $\qquad$ $p = 3$ (bar)

demgemäß Istdruck der Gasspannung
nach Gasverlust $\qquad$ $p_2 = 97$ (bar)

Größe der Kammer 7, geschaltet
als Meß- und Dosierkammer $\qquad$ $V_K = 1$ (1)

Gasdruck der Nachfülleinrichtung
in Form der Gasflasche 19
mittels der Drucksteigerungseinrichtung konstant eingeregelt auf $\qquad$ $p_N = 200$ (bar)

Gasvolumen bei Normaldruck $P_o$ $\qquad$ : $V_o$ (1).

Aus diesen Werten ergibt sich ein Gasfüllvolumen von:
Speichergröße $V$ x Solldruck $p_s$ = Gasvolumen $p_o$ (bezogen auf Normaldruck)
100 (l) x 100 (bar) = 10 000 (l)

Der Gasverlust des Speichers von seinem Solldruck 100 bar auf den Istdruck $p_2$ beträgt:
Speichergröße $V$ x Abfall der Gasvorspannung $p$ = verlorenes Gasvolumen bei $p_o$
100 (l) x 3 (bar) = 300 (l).

Die Meß- und Dosierkammer 7 hat im vorliegenden Rechenbeispiel eine Größe von 1 l. Durch den einregulierten Druck der Drucksteigerungseinrichtung der Gasflasche 19 in der Höhe von 200 bar wird die Kammer 7 mit einem Gasvolumen gefüllt, das sich wie folgt ergibt:

Meß- und Dosierkammergröße $V_K$ x (Nachfülldruck $p_N$ - Istdruck $p_2$) = $V_o$ der Nachladung

6

1 (l) x (200 (bar) - 97 (bar) ) = 103 l bezogen auf $p_0$.

Da das verlorene Gasvolumen im Hydrospeicher 300 l beträgt, wären demgemäß 3 Füllvorgänge mit 103 l Gas pro Füllvorgang über die Meß- und Dosierkammer 7 vorzunehmen, um die tatsächlich im Hydrospeicher herrschende Gasvorspannung in etwa auf den Druck-Sollwert zurückzuführen. Durch eine Kontrollmessung kann am Ende der drei Füllvorgänge über den Drucksensor 8 der Rechner 10 das Ergebnis kontrollieren und gegebenenfalls über die Ventile 5, 15 und 16 eine Korrektur vornehmen.

Anstelle der hier beschriebenen Vorgehensweise könnte der Rechner 10 auch fest vorgegeben pro 1 bar Abweichung des Druck-Istwertes vom Druck-Sollwert einen Dosierschritt vorsehen. Der Rechner 10 könnte aber auch über einen vorgebbaren Zeitraum die Anzahl der Nachfülltakte ermitteln und dann demgemäß für einen gleichen vorausliegenden Zeitraum dieselben Dosiervorgänge durchführen. Im übrigen wäre auch eine laufende Betriebsüberwachung möglich, soweit ein zweiter Drucksensor in der Speicheranlage untergebracht wäre, sowie ein Temperatursensor. Aus den laufenden Werten dieser zwei Sensoren in Relation zum ermittelten Druckwert aus der Meß- und Dosierkammer kann dann der echte Füllungswert mit Hilfe des Rechners errechnet und so die laufende Kontrolle sichergestellt werden. Entsprechend würde dann eine Gasmenge korrigiert werden, nach den jeweiligen geforderten Vorgaben. Dies kann auch während des laufenden Betriebes der Anlage geschehen.

Mit der vorliegenden Meß- und Dosierkammer ist jedenfalls die Feststellung der tatsächlichen Gasvorspannung innerhalb des Hydrospeichers möglich, ohne daß es zu Meßwertverfälschungen kommt, die durch Nichtlinearitäten im Temperaturfeld innerhalb des Hydrospeichers bedingt sind und die bei einer Druckmessung unmittelbar im Speicher selbst zum Tragen kämen.

Der Rechner 10 ist über ein in ihm implementiertes Programm betreibbar. Es sind aber auch Programme für verschiedene Arten von Überwachungsvorgängen vorstellbar, mit denen je nach vorliegendem Anwendungsfall der Rechner programmierbar ist.

Durch die vorgeschlagene Anordnung der Meß- und Dosierkammer 7 ist es auch möglich, über die Gasseite den Füllungsgrad des Hydrospeichers 1 an Flüssigkeit zu bestimmen, da das Trennmittel, beispielsweise in Form der Membran bei einem Membranspeicher, zwischen Gas und Flüssigkeit auf beiden Seiten den gleichen Druckverlauf aufweist.

Die Bestimmung der Flüssigkeits- bzw. der Ölfüllung kann hierbei auf zwei grundsätzlich verschiedenen Wegen erfolgen.

Ein Weg ist, die Meß- und Dosierkammer 7 während des Taktens der Gesamthydraulikanlage zu einem definierten Zeitpunkt, zu welchem man den Ölfüllungsgrad bestimmen will, durch das Ventil 5 abzusperren und nach Ablauf einer Temperaturanpassungszeit wird der dann herrschende Gasdruck in der Meß- und Dosierkammer 7, wie beschrieben, gemessen. Durch Vergleich dieser gemessenen Gasspannung, der auf den Abschaltpunkt bezogen ist, kann mittels des Rechners 10 über die ihm eingegebene isotherme Füllungskurve ein auf der Kurve liegender Punkt (Identpunkt) des Gasdruckes gefunden werden, der zum jeweiligen Füllungsgrad des Speichers gehört.

Die Meßanzeige erfolgt zeitlich also nach einem gewissen Zeitraum, z.B. 5 Minuten. Voraussetzung ist, daß die Gasvorspannung bei entleertem Speicher 1 identisch ist mit den für die isotherme Füllungskurve eingegebenen Werten. Dies wird durch das oben beschriebene Verfahren für die Bestimmung der Gasvorspannung sichergestellt.

Bei dem anderen Weg kann bei sichergestellten identischen Drücken der Soll-Gasvorspannung und der Ist-Gasvorspannung der zur Sollvorspannung gehörige Druckverlauf in der Meß- und Dosierkammer 7 über einen vollständigen Taktablauf der Gesamthydraulik aufgenommen werden und bei Kontrollbedarf unter gleichen Bedingungen wieder ablaufen und mit dem ersten Kurvenverlauf verglichen werden. Ist in beiden Fällen der Kurvenverlauf identisch, so ist auch zu jedem Zeitpunkt des Taktablaufes der identische Füllungsgrad auf der Ölseite gegeben.

Bei einer anderen Ausführungsform des erfindungsgemäßen Verfahrens wird der Behälter in Form des Hydrospeichers 1 mittels der Meß- und Dosierkammer 7 mit einer vorgebbaren Dosiermenge an Gas befüllt, die einen Druckanstieg im Hydrospeicher 1 bewirkt, der mittels der Druckmeßeinrichtung 8 gemessen wird und der zu einem theoretisch ermittelten Druckanstieg in Verhältnis gesetzt wird, der sich bei Befüllen mit derselben Dosiermenge bei einem vorgegebenen Druck-Sollwert des Gases im Hydrospeicher 1 ergibt. Der Einsatz dieses Verfahrens ist insbesondere für solche Fälle gedacht, bei denen der Hydrospeicher 1 mit einem vorgebbaren hydraulischen Druck beaufschlagt ist und zur Kontrolle der Gasvorspannung nicht auf der Hydraulikseite entleert werden kann. Ist der tatsächliche Druckanstieg (Druckdifferenz) abweichend von dem theoretisch ermittelten Druckanstieg, beispielsweise zu gering nach dem Einfüllen der Dosiermenge, so war auch die am Beginn des Nachfüllvorganges im Hydrospeicher 1 eingeschlossene wirksame Gasmenge zu gering und weitere Nachfüllvorgänge sind notwendig.

Die vorstehende Beschreibung und die Zeichnung beschränken sich nur auf die Angabe von Merkmalen, die für die beispielsweise Verkörperung der Erfindung wesentlich sind. Soweit daher Merkmale in der Beschreibung und in der Zeichnung offenbart und in den Ansprüchen nicht genannt sind, dienen sie erforderlichenfalls auch zur Bestimmung des Gegenstandes der Erfindung.

**Patentansprüche**

1. Verfahren zum Einhalten eines vorgebbaren Druck-Sollwertes eines in mindestens einem Behälter (1) aufnehmbaren Gases, dessen Druck-Istwert mittels eines Meßvorganges erfaßt wird, bei dem eine gasführende Verbindung zwischen dem Behälter (1) und einer einen Bruchteil des Behältervolumens aufweisenden Meßkammer (7) hergestellt wird, die über eine Druckmeßeinrichtung (8) verfügt, wobei für das Einhalten des Druck-Sollwertes eine gasführende Verbindung zwischen dem Behälter (1) und einer Reguliereinrichtung hergestellt wird, die bei einem Druck-Istwert, der kleiner oder größer ist als der Druck-Sollwert, den Behälter (1) mit Gas befüllt bzw. von Gas entleert, dadurch gekennzeichnet, daß die Reguliereinrichtung eine mit der Meßkammer (7) identische Dosierkammer (7) aufweist, mittels der das Befüllen bzw. Entleeren mit einer vorgebbaren Dosiermenge durchgeführt wird und daß die gasführende Verbindung zu vorgebbaren Zeitpunkten freigegeben oder versperrt wird.

2. Verfahren nach Anspruch 1, dadurch gekennzeichnet, daß für den Meßvorgang das Gas im Behälter (1) auf ein vorgebbares Volumen gebracht wird, für das der Druck-Sollwert bekannt ist.

3. Verfahren nach Anspruch 1, dadurch gekennzeichnet, daß der Behälter (1) mittels der Meß- und Dosierkammer (7) mit einer vorgebbaren Dosiermenge befüllt wird, die einen Druckanstieg im Behälter (1) bewirkt, der mittels der Druckmeßeinrichtung (8) gemessen wird und der zu einem theoretisch ermittelten Druckanstieg in Verhältnis gesetzt wird, der sich bei Befüllen mit derselben Dosiermenge bei einem vorgegebenen Druck-Sollwert des Gases im Behälter (1) ergibt.

4. Verfahren nach einem der Ansprüche 1 bis 3, dadurch gekennzeichnet, daß mittels der Druckmeßeinrichtung (8), die an einen Rechner (10) angeschlossen ist, der Druck-Istwert in der Meß- und Dosierkammer (7) bezogen auf einen vorgebbaren Temperaturwert erfaßt wird und daß der Rechner (10) für das Befüllen oder Entleeren mittels der Meß- und Dosierkammer (7) die Reguliereinrichtung ansteuert.

5. Verfahren nach Anspruch 4, dadurch gekennzeichnet, daß mittels einer Temperaturmeßeinrichtung der Meß- und Dosierkammer (7) die jeweils in ihr herrschende Temperatur gemessen wird und daß der Rechner (10) den bei dieser jeweiligen Temperatur über die Druckmeßeinrichtung (8) ermittelten Druck-Istwert auf einen vorgebbaren Bezugs-Temperaturwert umrechnet.

6. Verfahren nach einem der Ansprüche 1 bis 5, dadurch gekennzeichnet, daß in diskreten Zeitabständen der Rechner (10) gemäß einem vorgebbaren Programm einen Meßvorgang und/oder einen Befüllvorgang und/oder einen Entleervorgang veranlaßt.

7. Verfahren nach einem der Ansprüche 1 bis 6, dadurch gekennzeichnet, daß dieses in einer Speicheranlage mit mehreren Behältern (1) zur Anwendung kommt.

8. Vorrichtung zum Durchführen des Verfahrens nach einem der Ansprüche 1 bis 7, dadurch gekennzeichnet, daß diese mindestens die folgenden Komponenten aufweist:
   - eine an das Innere eines Behälters (1) über eine gasführende, absperrbare Verbindung (4,6) anschließbare Meßkammer (7),
   - eine Druckmeßeinrichtung (8) und
   - eine Reguliereinrichtung, die eine Dosierkammer (7) aufweist, die identisch mit der Meßkammer (7) ist.

9. Vorrichtung nach Anspruch 8, dadurch gekennzeichnet, daß das Kammervolumen der Meß- und Dosierkammer (7) kleiner gleich 15% des Volumens des Behälters (1) ist.

10. Vorrichtung nach Anspruch 8 oder 9, dadurch gekennzeichnet, daß die Meß- und Dosierkammer (7) alternativ entweder mittels gasführender, absperrbarer Verbindungen an eine Befüllungseinrichtung (19) oder an eine Druck-Abgabestelle (20) der Reguliereinrichtung anschließbar ist.

11. Vorrichtung nach Anspruch 10, dadurch gekennzeichnet, daß die Befüllungseinrichtung (19) Mittel aufweist, die den von ihr abgebbaren Druck konstant halten.

12. Vorrichtung nach einem der Ansprüche 8 bis 11, dadurch gekennzeichnet, daß die Druckmeßeinrichtung (8) an einen Rechner (10) angeschlossen ist, der die Vorrichtung nach dem erfindungsgemäßen Verfahren betreibt, wobei hierfür der Rechner jeweils Ventile (5,15,16) ansteuert, die die gasführenden Verbindungen zwischen dem jeweiligen Behälter (1) und der Meß- und Dosierkammer (7) sowie dieser und der Befüllungseinrichtung (19) oder der Druck-Abgabestelle (20) freigeben bzw. versperren.

13. Vorrichtung nach einem der Ansprüche 8 bis 12, dadurch gekennzeichnet, daß diese als zusätzliche Komponente eine Temperaturmeßeinrichtung für die Meß- und Dosierkammer (7) aufweist.